# EUROPEAN PATENT APPLICATION

(11) **EP 3 421 523 A1**
(43) Date of publication of application: **02.01.2019**
(21) Application number: 17178578.5
(22) Date of filing: 29.06.2017
(51) Int. Cl.: C08J 5/18, C08K 3/04, C08K 5/14, C08L 23/08, H01B 3/44

(54) **REACTIVE COMPOUNDING OF ETHYLENE VINYL ACETATE**

(71) Applicant: Borealis AG, 1220 Vienna (AT)
(72) Inventor: Prieto, Oscar, 416 72 Göteborg (SE); Fagrell, Ola, deceased (SE); Westling, Lars, Hackettstown, NJ 07840 (US); Bergqvist, Mattias, 444 86 Stenungsund (SE); Wiecoreck, Kenneth, Washington, NJ 07882 (US)
(74) Representative: Borealis AG

(57) **Abstract**

The present invention provides a method for producing an at least partially crosslinked polymer composition, having a first melt index (MI) value and a first tensile strength, comprising the steps of: a. providing an ethylene vinyl acetate (EVA) copolymer, the EVA copolymer having a second MI value and a second tensile strength and containing at least 30 wt% units derived from vinyl acetate, b. adding from 0.01 to 0.03 wt% of an organic peroxide, wherein the organic peroxide is diluted in 0.001 to 0.05 wt% of white oil, and c. blending the EVA copolymer and the organic peroxide at a temperature sufficient to initiate crosslinking. The first MI value of the at least partially crosslinked polymer composition is less than 5 g/10 min (190°C, 2.16 kg).

## Description

### TECHNICAL FIELD

The present invention relates to a method for producing at least partially crosslinked polymer composition. The invention also relates to a polymer composition comprising ethylene vinyl acetate (EVA) containing at least 30 wt% units derived from vinyl acetate, and to wire or cable comprising the at least partially crosslinked polymer composition.

### BACKGROUND OF THE INVENTION

Crosslinked compositions, including copolymers of ethylene vinyl acetate (EVA), are well-known in the art and have a wide variety of applications. In particular, crosslinked EVA is especially suited for applications requiring superior thermal and mechanical performance, such as in wire and cable insulation material. EVA may be crosslinked using silanes, peroxides, and/or electron beam radiation. It is known in the art to partially crosslink an EVA copolymer using organic peroxides. In such cases, crosslinking is typically initiated in an extrusion step and/or during a subsequent compounding step, in which additional components such as other polymers, fillers and/or additives are blended with the EVA copolymer. Alternatively, crosslinking may also be initiated by heat after the EVA copolymer has been formed into a final product, e.g. by extrusion onto a wire or cable as a coating material. In such situations, the composition may be partially crosslinked prior to forming or extruding, and full crosslinking is then initiated on the wire or cable.

Ethylene-vinyl acetate with a vinyl acetate content of at least 18 wt% secures good elasticity, dispersability in inorganic additives, and high transparency, and has thus been increasingly used in many applications such as footwear foams, electric wires, flame retardant compounds, and photovoltaic encapsulation materials.

An ethylene-vinyl acetate sheet used as an encapsulation material for photovoltaic modules has increasing transparency with increasing vinyl acetate content, thereby securing higher module efficiency. For this reason, the vinyl acetate content is generally kept at 26% or greater.

On the other hand, the ethylene-vinyl acetate can be prepared by adding ethylene and vinyl acetate at an appropriate mixing ratio into an autoclave or tubular reactor and conducting polymerization under high temperature and high pressure conditions. In this regard, when the amount of vinyl acetate added to the reactor increases, part of the vinyl acetate acts as a telomere and terminates the reaction, possibly lowering the molecular weight of the ethylene-vinyl acetate. Lower molecular weight of ethylene-vinyl acetate leads to higher melt index and lower melt strength. Ethylene-vinyl acetate with a vinyl acetate content of 33 wt%, for example, has a melt index of about 10 g/10 min and melt strength of about 30 mN.

High melt index resulting from increasing vinyl acetate content can lead to deterioration of the mechanical properties and processability. Therefore, using conventional ethylene-vinyl acetate having high vinyl acetate content provides compositions having high flexibility and elasticity, but poor mechanical properties and processability. This imposes some limitations in using ethylene-vinyl acetate alone for electric wires, flame retardant compounds, and so forth. A possible approach for overcoming limitations of ethylene-vinyl acetate mentioned above involves performing a post-reaction of ethylene-vinyl acetate in a reactor to enhance mechanical properties and processability. One possible post-reaction involves treating EVA with peroxides. According to this method, ethylene-vinyl acetate resin and peroxides are added to an extruder, which results in a composition having lower melt index and higher melt strength compared to the untreated EVA. Although peroxide treatment is a versatile method for modification of ethylene-vinyl acetate, it does suffer from a number of disadvantages, such as a great work loss, risk of contamination, need for repacking and potential processing defects.

Work loss and repacking caused by peroxide treatment are main factors of increased costs, thus limiting commercialization of EVA. Further, contaminants that are introduced or generated during peroxide treatment may cause quality problems of the final ethylene-vinyl acetate product.

US 7939607 discloses partially crosslinked ethylene-vinyl acetate (EVA) copolymers and methods for producing the same. The copolymers are crosslinked with one or more organic peroxides in an amount and under conditions sufficient to substantially lower the melt index of the starting EVA composition while maintaining or increasing the tensile strength of the copolymer. The peroxides are added in an amount of 0,03% to 0,25% in the presence of a mineral oil.

US2012108758 describes a transparent master batch mixture that includes an ethylene copolymer and an ethylene monomer having a polar function (a) and a peroxide (b). The composition includes, by weight, from 5 to 30% of (b); from 70 to 95% of (a); and the copolymer (a) includes from 20 to 45 wt % of ethylene monomer having a polar function. The peroxide is added in the amount >5% in relation to the amount of EVA.

US5589526 describes a master batch composition based on elastomeric carriers, comprising an organic peroxide, a plasticizer and a filling material and optionally further additives compatible with the organic peroxide, wherein, in addition to the elastomeric carrier, it contains a polyoctenamer. According to the process for the production of the master batch composition, (a) the elastomeric carrier, the polyoctenamer, the plasticizer and optionally a part of the filling material or filling material mixture are homogeneously mixed and thereafter (b) the filling material or the filling material mixture or possibly the remaining amounts thereof, together with the organic peroxide, are incorporated at a temperature below the decomposition temperature of the peroxide. The peroxide is added in the amount of 30 to 50% wt.

US5182072A discloses a process for producing an ethylene/vinyl acetate copolymer having a reduced vinyl acetate content. Silicon gum (organopolysiloxane) in the amount of 1 to 5% in relation to the EVA is used to disperse the peroxide.

US4725637 describes a process for producing a thermoplastic elastomer comprising dynamically curing with a peroxy curing agent (A) nitrile rubber and (B) homopolymer or copolymer of ethylene, which is curable with the peroxy curing agent but excluding copolymers comprising ethylene and an acrylic or methacrylic ester.

Traditional HPPE reactors (autoclave, tube) cannot produce polymers having high VA-content and at the same time low MI's. Typically, EVA having 45% vinyl acetate has MI of 35-40 g/10 min. This problem has been addressed by using solution processes providing polymers having low MI at high VA-content. However, such processes are slow and costly.

In power cables, such as power cables for medium voltage (6 to 36 kV) and high voltages (> 36 kV), the electric conductor is usually coated with an inner semiconducting layer, followed by an insulating layer, then an outer semiconducting layer, followed by optional layer(s) such as water-barrier layer(s) and on the outside optionally sheath layer(s). The layers of the cable are commonly based on different types of ethylene polymers.

The insulating layer and the semiconducting layers normally consist of ethylene homo- and/or copolymers which are preferably cross-linked. LDPE (low density polyethylene, i.e. polyethylene prepared by radical polymerization at a high pressure) cross-linked with peroxide, e.g. dicumyl peroxide, in connection with the extrusion of the cable, has become the predominant cable insulating material. The inner semiconducting layer normally comprises an ethylene copolymer, such as an ethylene-vinyl acetate copolymer (EVA), ethylene methylacrylate copolymer (EMA), ethylene ethylacrylate copolymers (EEA), ethylene butylacrylate copolymer (EBA), cross-linking agent (e.g. peroxide) and sufficient amount and type of conductive filler to make the composition semiconductive. The composition of the outer semiconducting layer may differ from the composition of the inner semiconductive layer depending on whether it has to be strippable or not.

Besides being semiconducting it is often desired that the outer semiconducting layer is strippable from the other layers (i.e. the insulating layer) to facilitate the joining of two cable ends. This strippability is achieved by making the outer semiconducting layer more polar (e.g. with the aid of a polar polymer, such as EVA) than the underlying insulating layer and crosslinking the outer semiconducting layer.

Rubber-based strippable semiconductive compounds are inexpensive materials that provide low strip forces. However, these materials are prone to scorch during compounding. Moreover, rubber-based materials have poor processability and therefore provide final products with unpredictably variable properties.

In the present invention, the term "strippable" denotes that the semiconductive layer has a strip force of 8 kN/m or less, preferably below 4 kN/m, when measured according to "Strip force 90°" as described below under "Methods".

In view of the above, there is still a need for developing a simple and economically feasible method for preparing ethylene-vinyl acetate having high vinyl acetate content providing high transparency and elasticity, and at the same time having high melt strength and good mechanical properties. Moreover, there is a need for a method for forming a crosslinked EVA copolymer that increases the molecular weight of the copolymer and maintains or increases the tensile strength while significantly lowering the melt index of the resulting partially crosslinked polymer. Such a method would result in a partially crosslinked copolymer having improved tensile strength and heat resistance combined with maintained flexibility and flame retardant performance.

Therefore, the object of the present invention is providing a method for creating an EVA having low melt index and allowing high filler content that may be used in a strippable outer semiconductive layer.

### SUMMARY OF THE INVENTION

The present invention provides a solution to the above problem by providing a method for producing an at least partially crosslinked polymer composition, having a first melt index (MI) value and a first tensile strength, comprising the steps of:
a. providing an ethylene vinyl acetate (EVA) copolymer, said EVA copolymer having a second MI value and a second tensile strength and containing at least 30 wt% units derived from vinyl acetate,
b. adding from 0.01 to 0.03 wt% of an organic peroxide, wherein the organic peroxide is diluted in 0.001 to 0.05 wt% of white oil,
c. blending the EVA copolymer and the organic peroxide at a temperature sufficient to initiate crosslinking.

The first MI value of the resulting at least partially crosslinked polymer composition is less than 5 g/10 min (190°C, 2.16 kg).

As peroxides used for cross-linking, the following compounds can be mentioned: di-tert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, di(tert-butylperoxy-isopropyl)benzene, butyl-4,4-bis(tert-butylperoxy)valerate, 1,1 -bis(tert-butylperoxy)-3,3,5-trimethylcyclohexane, tert-butylperoxybenzoate, dibenzoylperoxide.

Preferably, the peroxide is selected from 2,5-di(tert-butylperoxy)-2,5-dimethylhexane, 2,5-di(tert-butylperoxy)-2,5-dimethyl-3-hexyne, di(tert-butylperoxy-isopropyl)benzene, dicumylperoxide, tert-butylcumylperoxide, di(tert-butyl)peroxide, or mixtures thereof. Most preferably, the organic peroxide is 2,5-di(tert-butylperoxy)-2,5-dimethylhexane.

The process of the present invention provides a composition with rubber behavior which will improve strippability for strippable semiconductive materials, such that the strip force of the strippable semiconductive layer is below 8 kN/m, preferably below 4 kN/m. Strippability is defined in cable standards e.g ANSI/ICEA S-93-639. Mineral oil (i.e. light paraffin oil, Saybolt 125/135) provides an excellent dispersion of the peroxide, which not only improves processability, but also enhances thermal stability and provides an improved consistency of final product. The method of the present invention results in a decreased number of manufacture steps, which in turn lowers manufacturing costs. The resulting low MI offers high mechanical strength.

The method for producing an at least partially crosslinked polymer composition may be performed as follows. An EVA copolymer having a vinyl acetate content of at least 30wt% is loaded into an extruder, and an organic peroxide diluted in white oil is also added to the extruder. The peroxide is then dispersed in the copolymer by the extruder and the extruder is heated to a temperature sufficient to initiate crosslinking of the EVA copolymer. Once the desired level of crosslinking has been reached, the resulting at least partially crosslinked composition is removed from the extruder. In further embodiments, the composition is cooled and pelletized upon removal from the extruder.

The EVA copolymer and the peroxide are mixed at a temperature sufficient to initiate crosslinking. Persons of skill in the art will appreciate that a wide variety of temperatures and temperature profiles may be effective for initiating crosslinking, and that such temperatures will vary based on a number of parameters, such as, for example, the type of vessel used for the crosslinking process and the particular peroxide used. Such temperature manipulations are well within the abilities of one having skill in the art, and are therefore not set forth in detail herein.

The EVA copolymer and the organic peroxide are blended using any suitable process such as, for example, a batch or continuous mixing process. These processes are well known in the art and include single and twin screw mixing extruders, static mixers, internal mixers, including Banbury-type mixers, and impingement mixers, as well as any other machine or process designed to disperse a first component and a second component in intimate contact. In preferred embodiments of the invention, the mixing process is conducted in an extruder, even more preferably in a twin-screw extruder.

As previously stated with regard to temperature, the mixing process conditions are highly variable, as will be appreciated by one of skill in the art. The residence time (i.e., in an extruder or other continuous process), mixing speed, feed rate, and pressure, for example, may be adjusted as needed and such adjustments are well within the knowledge of one of ordinary skill in the art. As long as the objectives of the invention are met, including, for example, reaching specified melt index and tensile strength values, the processing conditions are not critical. However, for the purposes of illustration only, typical process conditions when using a twin screw extruder include residence times of about 10 seconds to about 10 minutes, preferably from about 30 seconds to about 5 minutes, and more preferably from about 30 seconds to about 2 minutes, and the temperature in various zones within the extruder may range from about 50°C to about 275°C, preferably from about 75°C to about 250°C, and more preferably from about 125°C to about 225°C.

The diluted peroxide may be injected into an extruder or mixer. The mixture of peroxide and white oil may comprise from 5 to 50 wt% peroxide, preferably from 5 to 20 wt% peroxide.

The method according to the present invention, provides an at least partially crosslinked polymer composition having MI of from 0.05 to 2.0 g/10 min, preferably from 0.05 to 1.0 g/10 min.

The present invention also relates to polymer composition comprising ethylene vinyl acetate (EVA) containing at least 30 wt% units derived from vinyl acetate, 0.001 to 0.05 wt% of white oil and having MI of below 5 g/10 min.

The polymer composition according to the present invention may further comprise additives, such as antioxidants, scorch retarders, crosslinking modulating (e.g. boosting or inhibiting) agents, stabilizers, processing aids, lubricants, compatibilizers, parting agents, flame retardant additives, acid scavengers, inorganic fillers, voltage stabilizers, additives for improving water tree resistance, or mixtures thereof.

The polymer composition of the present invention may be used in a wire or cable. In particular, the polymer composition may constitute a strippable semiconductive layer, wherein strip force of the strippable semiconductive layer is below 8 kN/m, preferably below 4 kN/m.

Further, the polymer composition of the present invention may be used within the technical area of films, moulding or pipes.

### DETAILED DESCRIPTION OF THE INVENTION

### Materials

Luperox D-16, commercially available from Arkema, is t-butyl cumyl peroxide, having structural formula:

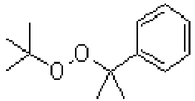

Levapren 400, commercially available from Lanxess, is an ethylene-vinyl acetate copolymer, having 40 wt% vinyl acetate, and MFR₂=3g/10min.

Evatane 40-55, commercially available from Arkema, is an ethylene-vinyl acetate copolymer, having 38-41 wt% vinyl acetate, and melt index (190°C/2.16 kg) of 48-62 g/10min (ISO 1133/ASTM D1238).

Mineral oil, commercially available from Eki-Chem, is a light mineral oil, CAS 8042-47-5.

### Methods

The MFR₂ was measured with 2.16 kg load at 190°C according to ISO 1133.

Strippability is defined in cable standards, e.g ANSI/ICEA S-93-639. The insulation shield is notched with two cuts 1/5 inch apart. A tensile tester is used to pull the semiconductive layer from the insulation layer and measure the strip force in Ibs/1/2 inch.

### Strip force 90°

Cable samples of 10 cm up to 13.5 cm of length and 10 mm width were cut in cross sectional direction from a test cable which had an inner semiconductive layer with a thickness of 0.8 + 0.05 mm, an insulation layer with a thickness of 5.5 + 0.1 mm, and an outer semiconductive layer with a thickness of 1 + 0.1 mm. The test cables were prepared according to the method as described below under "Production of test cables". The strip force test can be made for test cable wherein said sample is in non-crosslinked or crosslinked form. The samples were conditioned for 16 hours to 2 weeks at 23°C and 50% relative humidity. The separation of the outer semiconductive layer from the insulation was initiated manually. The cable was fixed to Alwetron TCT 25 tensile testing instrument (commercially available from Alwetron). The manually separated part was clamped onto a wheel assembly which is fixed to a moveable jaw of said instrument. The movement of the tensile testing machine causes the separation of said semiconductive layer from said insulation layer to occur. The peeling was carried out using a peeling angle of 90° and peeling speed of 500 mm/min. The force required to peel said outer semiconductive layer from the insulation was recorded and the test was repeated at least six times for each test layer sample. The average force divided by the width (10 mm) of the sample was taken as said strip force and the given values (kN/m at 90 °) represent the average strip force of the test samples, obtained from at least six samples.

### Production of test cables

The test cables were prepared using a so-called "1 plus 2 extruder set-up", in a Maillefer extruder, supplied by Maillefer. Thus, the inner semiconductive layer was extruded on the conductor first in a separate extruder head, and then the insulation and outer semiconductive layer are jointly extruded together on the inner semiconductive in a double extruder head. The inner and outer semiconductive extruder screw had a diameter of 45 mm/24D and the insulation screw had a diameter of 60 mm/24D.

### Examples

### Example 1

The polymer compositions in Table 1 are prepared in bench scale using Banbury mixer. The polymer base resin is added to the mixer, followed by the rubber components. Then, carbon black is added. The components are mixed at 146°C.

Comparative example 1 (CE1) presented in Table 1 below is a semiconductive composition comprising commercially available Levapren, which is a 40% EVA with MFR₂=3g/10min. When a medium voltage cable is extruded using the composition of the comparative example as a semiconductive layer and then tested for strip forces, a value around 2.1 kN/m is obtained.

If a semiconductive cable composition is made of only EVA having high MFR, such as Evatane 40-55 with 40% EVA and MFR₂=55g/10min, then the corresponding semiconductive layer will be bounded. Therefore, an EVA resin having low MFR is needed to achieve acceptable strip forces.

As may be seen in Table 1, inventive examples 1 and 2 (IE1 and IE2) describe a semiconductive composition comprising EVA 40% with MFR₂=2.3g/10min and MFR₂=2.2g/10min, respectively. These resins are obtained by subjecting commercially available EVA having MFR₂=55 g/10min, i.e. Evatane 40-55, to reactive compounding using different levels of peroxide dispersed in mineral oil. Strip forces evaluated on medium voltage cables using above compositions show values of 2.6 and 3.0 kN/m respectively.

This indicates that both the inventive compositions meet the strippability demands (<3.3 kN/m).

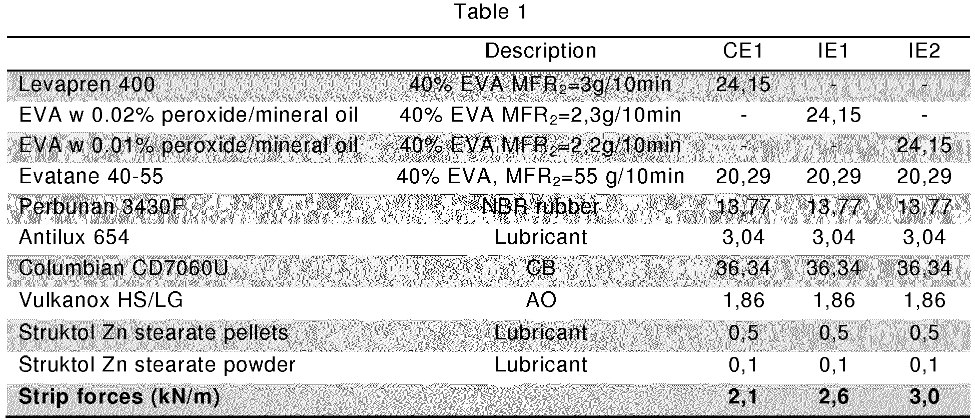

### Example 2

### Preparation of the tapes

The tapes are prepared in a single screw extruder applying temperature profile of 110, 110, 115 °C. The tapes are extruded through a slot cast die and have a thickness of 0.25 mm.

### Comparative sample 1 (CS1)

The tape of comparative sample 1 was extruded using commercially available Levapren 400.

### Comparative sample 2 (CS2)

1 kg of Evatane 40-55 was loaded into a Banbury mixer, followed by addition of 0.0002 kg of *t*-butyl cumyl peroxide (D-16). The mixture was allowed to react at 150°C for 3 minutes at a rotor speed of 100rpm. The reaction mixture was dropped at a temperature of 150°C. The piece was chopped into flakes, which were extruded to tape according to the procedure above.

### Inventive sample 1 (IS1)

0.0002 kg of *t*-butyl cumyl peroxide (D16) was dissolved in 0.5 kg of mineral oil. 25 kg of Evatane 40-55 was loaded into a Henschel mixer followed by 0.25 kg of the mineral oil solution of peroxide. The mixture was allowed to react at at least 150°C for 3 minutes.

### Analysis and results

Three different tape samples obtained above were analyzed by visual inspection of a human being. The tapes were assessed using the grades from A to C, wherein A is the best grade showing a visually and tactilely smooth tape with less than 1 defect per 64.5 cm², while grade C is the poorest having more than 50 defects per 64.5 cm². The results are summarized in Table 2.

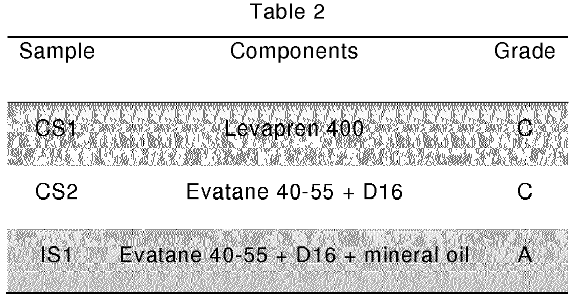

As may be seen from Table 2, mineral oil is needed in order to have a good processing. When mineral oil is not added, tapes of poor grades were obtained.

Viscosity of the compositions CS1, CS2 and IS1 were measured using CEAST piston rheometer. Pellets were fed into the throat, the plunger was inserted, and the measurement was started when the preset level of the plunger was reached. The results are summarized in Table 3, and also represented in Figure 1, wherein the viscosity of the samples is plotted as a function of shear rate.

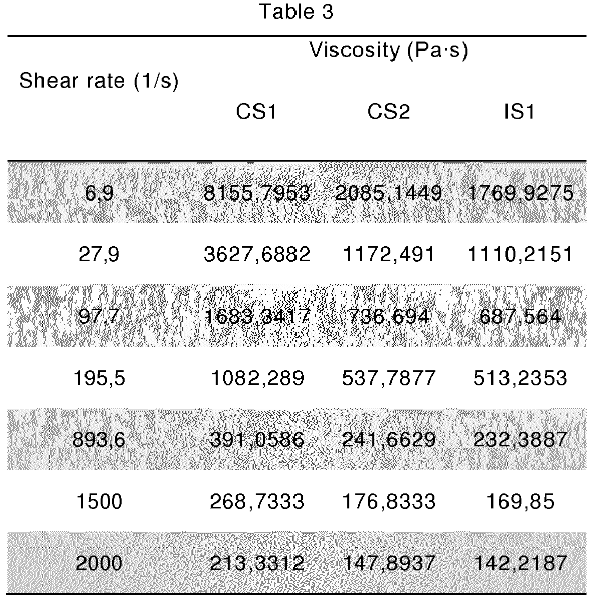

As may be seen from Figure 1, the viscosity, which is inversely proportional to melt flow rate, of the compositions of CS2 and IS2 are almost identical.

Tensile strength of the samples was measured using Instron tensile tester. It was found that none of the samples broke. When elongation was well over 1000%, the stop position was reached.

Although the present invention has been described with reference to various embodiments, those skilled in the art will recognize that changes may be made without departing from the scope of the invention. It is intended that the detailed description be regarded as illustrative, and that the appended claims including all the equivalents are intended to define the scope of the invention.

## Claims

1. A method for producing an at least partially crosslinked polymer composition, having a first melt index (MI) value and a first tensile strength, comprising the steps of:
a. providing an ethylene vinyl acetate (EVA) copolymer, said EVA copolymer having a second MI value and a second tensile strength and containing at least 30 wt% units derived from vinyl acetate,
b. adding from 0.01 to 0.03 wt% of an organic peroxide, wherein the organic peroxide is diluted in 0.001 to 0.05 wt% white oil,
c. blending the EVA copolymer and the organic peroxide at a temperature sufficient to initiate crosslinking, wherein:
the first MI value of the at least partially crosslinked polymer composition is less than 5 g/10 min (190°C, 2.16 kg).

2. The method according to claim 1, wherein the peroxide is blended with the copolymer in a continuous mixing process.

3. The method according to claim 2, wherein the continuous mixing process comprises an extruder.

4. The method according to claim 3, wherein the extruder is a twin-screw extruder.

5. The method according to claim 3, wherein the extruder is a single-screw extruder.

6. The method according to claim 1, wherein the peroxide is blended with the copolymer in a batch mixing process.

7. The method according to claim 6, wherein the batch mixing process comprises an internal mixer.

8. The method according to claim 3, wherein the residence time in the extruder is from 30 seconds to 5 min, preferably from 30 seconds to 2 min.

9. The method according to claim 3, wherein the extruder is maintained at a temperature sufficient to initiate peroxide crosslinking.

10. The method according to any one of claims 3-9, the diluted peroxide is injected into an extruder or mixer.

11. The method according to claim 1, wherein the mixture of peroxide and white oil comprises from 5 to 50 wt% peroxide, preferably from 5 to 20 wt% peroxide.

12. The method according to claim 1, wherein the first melt index of the polymer composition is from 0.05 to 2.0 g/10 min, preferably from 0.05 to 1.0 g/10 min.

13. At least partially cross-linked polymer composition comprising ethylene vinyl acetate (EVA) containing at least 30 wt% units derived from vinyl acetate, 0.001 to 0.05 wt% of white oil and having MI of below 5 g/10 min.

14. A polymer composition according to claim 13, further comprising carbon black.

15. A wire or cable comprising the polymer composition according to claim 13.

16. A wire or cable according to claim 15, wherein said polymer composition constitutes a strippable semiconductive layer, and wherein strip force of said strippable semiconductive layer is below 8 kN/m.
